# EUROPEAN PATENT APPLICATION

(11) **EP 4 657 571 A1**
(43) Date of publication of application: **03.12.2025**
(21) Application number: 24818205.7
(22) Date of filing: 04.01.2024
(51) Int. Cl.: H01M 4/62, H01M 10/052, H01M 10/0525, H01M 4/13, H01M 10/056

(54) **SECONDARY BATTERY AND ELECTRIC DEVICE COMPRISING SAME**

(30) Priority: 07.06.2023 CN 202310675468
(71) Applicant: Contemporary Amperex Technology Co., Limited, Ningde, Fujian 352100 (CN)
(72) Inventor: WU, Kai, Ningde, Fujian 352100 (CN); YAN, Guanfusheng, Ningde, Fujian 352100 (CN); JIN, Chao, Ningde, Fujian 352100 (CN); ZHONG, Ming, Ningde, Fujian 352100 (CN); WU, Zirui, Ningde, Fujian 352100 (CN); DAI, Zhipeng, Ningde, Fujian 352100 (CN); ZHANG, Xin, Ningde, Fujian 352100 (CN); ZHENG, Shibing, Ningde, Fujian 352100 (CN)
(74) Representative: Ziebig Hengelhaupt Intellectual Property Attorneys Patentanwaltskanzlei PartGmbB
(86) International application number: PCT/CN2024/070506
(87) International publication number: WO 2024/250666

(57) **Abstract**

A secondary battery and an electric apparatus including such secondary battery are provided. The secondary battery includes a negative electrode plate. The negative electrode plate includes a negative electrode current collector and a negative electrode film layer disposed on at least one surface of the negative electrode current collector, where the negative electrode film layer includes an additive capable of undergoing a nucleophilic reaction with a cyclic carbonate compound. The secondary battery exhibits high storage performance.

## Description

### CROSS-REFERENCE TO RELATED APPLICATIONS

This application incorporates by reference in its entirety Chinese Patent Application No. 202310675468.X, filed on June 7, 2023, and entitled "SECONDARY BATTERY AND ELECTRIC APPARATUS INCLUDING SUCH SECONDARY BATTERY."

### TECHNICAL FIELD

This application relates to the field of battery technology, and more particularly, to a secondary battery and an electric apparatus including such secondary battery.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to significant advancements in secondary batteries, higher performance requirements have been imposed on secondary batteries.

Therefore, how to enable a secondary battery to exhibit better storage performance has become an urgent problem to be solved in this field.

### SUMMARY

This application is made in view of the above issues, with an objective to provide a secondary battery and an electric apparatus including such secondary battery, where the secondary battery exhibits high storage performance.

To achieve the above objective, a first aspect of this application provides a secondary battery including a negative electrode plate, where the negative electrode plate includes a negative electrode current collector and a negative electrode film layer disposed on at least one surface of the negative electrode current collector, and the negative electrode film layer includes an additive capable of undergoing a nucleophilic reaction with a cyclic carbonate compound.

Thus, the secondary battery of this application improves storage performance of the secondary battery by incorporating the additive capable of undergoing a nucleophilic reaction with a cyclic carbonate compound into the negative electrode film layer.

In any embodiment, the additive includes at least one of a sulfur-containing substance, a selenium-containing substance, a composite of a sulfur-containing substance and a carbon-based material, a composite of a selenium-containing substance and a carbon-based material, a sulfur-containing substance having a carbon coating layer, or a selenium-containing substance having a carbon coating layer; optionally, the sulfur-containing substance includes at least one of elemental sulfur, lithium sulfide, or sodium sulfide; optionally, the selenium-containing substance includes at least one of elemental selenium, lithium selenide, sodium selenide, cobalt selenide, or nickel selenide; and optionally, the carbon-based material includes a nano carbon-based material or graphene. Optionally, the nano carbon-based material includes carbon nanotubes. The sulfur-containing substance and the selenium-containing substance undergo a reduction reaction during charging and discharging of the battery, perform a nucleophilic reaction with the cyclic carbonate compound, and participate in forming an SEI film. Additionally, by forming a composite with carbon nanotubes or having a carbon coating layer, conductivity and fast-charging performance of the battery can be improved.

In any embodiment, based on a total mass of the negative electrode film layer, a mass percentage of the additive is less than or equal to 10%, optionally 0.5%-5%. Thus, high storage performance can be achieved while enabling the battery to exhibit excellent conductivity and fast-charging performance.

In any embodiment, a particle size Dᵥ50 of the additive is 50 nm-500 nm, optionally 100 nm-200 nm. By controlling the particle size within the above range, a larger specific surface area can be obtained, increasing reaction activity.

In any embodiment, the negative electrode film layer includes a negative electrode active material, where the negative electrode active material includes a silicon-based material; optionally, a mass percentage of the silicon-based material in the negative electrode active material is greater than or equal to 5%, more optionally 5%-25%; and optionally, the silicon-based material includes at least one of elemental silicon, a silicon-carbon composite material, or a silicon-oxygen compound. By incorporating the silicon-based material into the negative electrode film layer, energy density of the battery can be enhanced.

In any embodiment, the negative electrode film layer includes a first negative electrode film layer and a second negative electrode film layer, where the second negative electrode film layer is disposed between the negative electrode current collector and the first negative electrode film layer, and the first negative electrode film layer and/or the second negative electrode film layer includes the additive.

In any embodiment, in the first negative electrode film layer, a mass percentage of the additive is greater than 0% and less than or equal to 10%, optionally 0.5%-5%, and in the second negative electrode film layer, a mass percentage of the additive is 0%-5%, optionally 0.1%-2%.

In any embodiment, both the first negative electrode film layer and the second negative electrode film layer include the additive, and materials of the additive in the first negative electrode film layer and the second negative electrode film layer are the same or different.

In any embodiment, both the first negative electrode film layer and the second negative electrode film layer include the additive; in the first negative electrode film layer, the mass percentage of the additive is denoted as A1, and in the second negative electrode film layer, the mass percentage of the additive is denoted as A2; the secondary battery satisfies: A1/A2 > 1; and optionally, 2 ≤ A1/A2 ≤ 10.

In any embodiment, the first negative electrode film layer includes a first negative electrode active material, the second negative electrode film layer includes a second negative electrode active material, and the first negative electrode active material and/or the second negative electrode active material includes the silicon-based material; and optionally, both the first negative electrode active material and the second negative electrode active material include the silicon-based material, and a mass percentage of the silicon-based material in the first negative electrode active material is greater than a mass percentage of the silicon-based material in the second negative electrode active material.

In any embodiment, a mass percentage of the silicon-based material in the first negative electrode active material is greater than or equal to 5%, optionally 5%-25%.

In any embodiment, the first negative electrode active material and/or the second negative electrode active material further includes a carbon material; and optionally, the carbon material includes graphite, more optionally high-compacted graphite with a powder compaction density of 1.8 g/cm³ or higher.

Through the arrangement of the above dual-layer negative electrode film layer, this application enables the secondary battery to achieve more excellent storage performance and conductivity.

In any embodiment, the secondary battery includes a positive electrode plate, where the positive electrode plate includes a positive electrode current collector and a positive electrode film layer disposed on at least one surface of the positive electrode current collector, and the positive electrode film layer includes a lithium replenishing agent; and optionally, the lithium replenishing agent includes at least one of lithium sulfide, lithium selenide, lithium oxide, or lithium nitride. By incorporating the lithium replenishing agent into the positive electrode film layer, active lithium can be supplemented, enabling the secondary battery to exhibit high energy density and fast-charging performance.

In any embodiment, the secondary battery includes an electrolyte, where the electrolyte includes a cyclic carbonate compound; and optionally, the cyclic carbonate compound includes at least one of ethylene carbonate, fluoroethylene carbonate, difluoroethylene carbonate, vinylene carbonate, or butylene carbonate. Thus, the cyclic carbonate compound undergoes a nucleophilic reaction with the additive in the negative electrode film layer, participates in forming an SEI film, which improves storage performance of the secondary battery.

In any embodiment, the negative electrode film layer includes both high-valence sulfur and low-valence sulfur, and/or the negative electrode film layer includes both high-valence selenium and low-valence selenium; optionally, the high-valence sulfur includes at least one of +4 valence sulfur or +6 valence sulfur; optionally, an S2p spectral peak of the high-valence sulfur is 168.5 eV-171 eV; and optionally, the low-valence sulfur includes -2 valence sulfur to -1/6 valence sulfur, and optionally, an S2p spectral peak of the low-valence sulfur is 161 eV-166.5 eV. Optionally, the high-valence selenium includes at least one of +4 valence selenium or +6 valence selenium; optionally, an Se3d spectral peak of the high-valence selenium is 58.9 eV-61.2 eV; optionally, the low-valence selenium includes -2 valence selenium; and optionally, an Se3d spectral peak of the low-valence selenium is 54 eV-55.1 eV.

A second aspect of this application provides an electric apparatus including the secondary battery according to the first aspect of this application.

### Effects of the Invention

According to this application, a secondary battery with excellent storage performance and an electric apparatus including such lithium-ion battery can be provided.

### BRIEF DESCRIPTION OF DRAWINGS

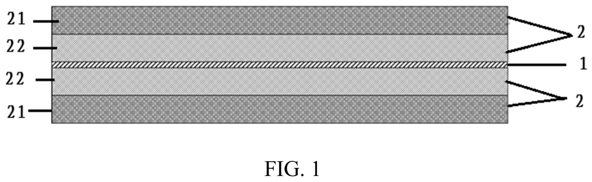

FIG. 1 is a schematic structural diagram of a negative electrode plate in a secondary battery of this application.

### Description of Reference Signs:

1. negative electrode current collector; 2. negative electrode film layer; 21. first negative electrode film layer; and 22. second negative electrode film layer

### DESCRIPTION OF EMBODIMENTS

Hereinafter, a secondary battery of this application and an electric apparatus including such secondary battery are described in detail with appropriate reference to the drawings. However, unnecessary detailed descriptions may be omitted in some cases. For example, detailed descriptions of well-known matters or repetitive descriptions of substantially identical structures may be omitted. This is to avoid unnecessarily prolonging the following description and to facilitate understanding by those skilled in the art. Furthermore, the drawings and the following description are provided to enable those skilled in the art to fully understand this application and are not intended to limit the subject matter recited in the claims.

"Ranges" disclosed in this application are defined in the form of lower and upper limits. A given range is defined by one lower limit and one upper limit selected, where the selected lower and upper limits define boundaries of that specific range. Ranges defined in this manner may include or exclude endpoints and may be arbitrarily combined, meaning any lower limit may be combined with any upper limit to form a range.

Unless otherwise specified, all embodiments and optional embodiments of this application may be combined with each other to form new technical solutions. Unless otherwise stated, all technical features and optional technical features of this application can be combined with each other to form new technical solutions.

Unless otherwise specified, "include" and "comprise" mentioned in this application indicate an open-ended or closed-ended form. For example, "include" and "comprise" may indicate that other components not listed may also be included or comprised, or only the listed components may be included or comprised.

A secondary battery refers to a battery that can be recharged to activate the active material for continued use after discharge, such as a lithium-ion battery. Typically, a secondary battery includes a positive electrode plate, a negative electrode plate, a separator, and an electrolyte. During charging and discharging of the battery, active ions (for example, lithium ions) intercalate and deintercalate back and forth between the positive electrode plate and the negative electrode plate. The electrolyte, positioned between the positive electrode plate and the negative electrode plate, primarily serves to conduct active ions.

One embodiment of this application provides a secondary battery including a negative electrode plate, where the negative electrode plate includes a negative electrode current collector and a negative electrode film layer disposed on at least one surface of the negative electrode current collector, and the negative electrode film layer includes an additive capable of undergoing a nucleophilic reaction with a cyclic carbonate compound.

The applicant has fortuitously discovered that when an additive capable of undergoing a nucleophilic reaction with a cyclic carbonate compound is added to the negative electrode film layer, the additive reacts with the cyclic carbonate compound in the electrolyte of the secondary battery, inducing ring-opening and forming a highly elastic PEO-like polymer, and participating in SEI formation to strengthen the film, which reduces irreversible capacity loss due to frequent SEI repair consuming active lithium. Simultaneously, a highly ionic conductive network is formed, facilitating migration of active ions (for example, lithium ions) in the secondary battery, reducing charge transfer impedance and electrochemical polarization, and minimizing polarization capacity loss, thereby improving storage performance of the battery.

There are no particular limitations on the additive as long as the additive is capable of undergoing a nucleophilic reaction with a cyclic carbonate compound. In some embodiments, the additive includes a sulfur-containing substance and/or a selenium-containing substance, for example, at least one of elemental sulfur, lithium sulfide, sodium sulfide, elemental selenium, lithium selenide, sodium selenide, cobalt selenide, or nickel selenide. These additives undergo a reduction reaction during charging and discharging of the battery and further react with the cyclic carbonate electrolyte solvent. For example, lithium sulfide reacts with ethylene carbonate to produce a poly(ethylene oxide) (PEO)-like polymer, participating in forming an SEI film. The specific reaction is shown below.

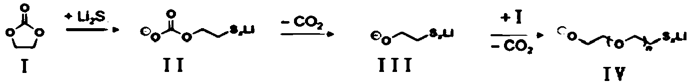

Additionally, in some embodiments, a carbon-based material is used as a substrate, and the sulfur-containing substance and/or the selenium-containing substance is loaded onto the carbon-based material to form a composite, where the carbon-based material includes a nano carbon-based material, graphene, or the like. In some embodiments, the nano carbon-based material is carbon nanotubes. Alternatively, carbon may be used as a coating material. In some embodiments, nanoporous carbon is used as a coating material to coat the surface of the sulfur-containing substance and/or the selenium-containing substance, forming a sulfur-containing substance having a carbon coating layer or a selenium-containing substance having a carbon coating layer. This enables improvement in battery storage performance while enhancing conductivity and fast-charging performance of the battery and reducing the amount of conductive agent used in the negative electrode.

In some embodiments, based on a total mass of the negative electrode film layer, a mass percentage of the additive is less than or equal to 10%. In some embodiments, based on the total mass of the negative electrode film layer, a mass percentage of the additive is 0.5%-5%. By keeping the additive content within the above range, storage performance, conductivity, and fast-charging performance of the battery can be further improved. In some embodiments, a particle size Dᵥ50 of the additive is 50 nm-500 nm; and in some embodiments, a particle size Dᵥ50 of the additive is 100 nm-200 nm. By controlling the particle size within the above range, a larger specific surface area can be obtained, increasing reaction activity.

In some embodiments, the negative electrode film layer includes a negative electrode active material, where the negative electrode active material includes a carbon material, and the carbon material may be at least one of graphite (including artificial graphite and natural graphite), soft carbon, or hard carbon. In some embodiments, the carbon material is graphite. The negative electrode active material further includes a silicon-based material; in some embodiments, a mass percentage of the silicon-based material in the negative electrode active material is greater than or equal to 5%; in some embodiments, a mass percentage of the silicon-based material in the negative electrode active material is 5%-25%; and in some embodiments, a mass percentage of the silicon-based material in the negative electrode active material is 5%-20%. Examples of the silicon-based material include at least one of elemental silicon, a silicon-carbon composite material, or a silicon-oxygen compound; in some embodiments, the silicon-based material includes a silicon-oxygen compound with a chemical formula of SiOₓ, where 0 < x < 2; in some embodiments, 0.5 ≤ x ≤ 1.5; and in some embodiments, x = 1. The silicon-oxygen compound exhibits high capacity performance and cycle life.

Incorporating a silicon-based material as the negative electrode active material into the negative electrode film layer significantly enhances energy density of the secondary battery. However, the silicon-based negative electrode material undergoes significant volume changes during intercalation and deintercalation of active ions, such as lithium ions, which may cause internal stress in the electrode material due to volume effects, leading to SEI rupture on the surface and frequent SEI repair consuming substantial active lithium. Additionally, the electrode material may fracture, losing electrical contact with the current collector, thus resulting in poor storage performance of the silicon-based negative electrode. However, the negative electrode film layer of the secondary battery of this application contains the additive described above, and the additive, as mentioned, can form a highly elastic polymer with the cyclic carbonate compound in the electrolyte, participating in SEI formation, thereby effectively mitigating volume swelling of the silicon-based material during charging at the negative electrode-electrolyte interface, improving battery capacity and stability of the negative electrode-electrolyte interface. Thus, through this embodiment, the secondary battery of this application achieves high storage performance while maintaining high energy density.

In this application, in some embodiments, the negative electrode film layer is configured as a dual-layer structure, namely including a first negative electrode film layer and a second negative electrode film layer, where the second negative electrode film layer is disposed between the negative electrode current collector and the first negative electrode film layer, and the first negative electrode film layer and/or the second negative electrode film layer includes the additive.

In some embodiments, a mass percentage of the additive in the first negative electrode film layer is greater than 0% and less than or equal to 10%; in some embodiments, a mass percentage of the additive in the first negative electrode film layer is 0.5%-5%; and/or a mass percentage of the additive in the second negative electrode film layer is 0%-5%; and in some embodiments, a mass percentage of the additive in the second negative electrode film layer is 0.1%-2%. When both the first negative electrode film layer and the second negative electrode film layer include an additive, the two layers may contain the same additive or different additives. When the mass percentage of the additive in the first negative electrode film layer is denoted as A1 and the mass percentage of the additive in the second negative electrode film layer is denoted as A2, and A1/A2 > 1. In some embodiments, 2 ≤A1/A2 ≤ 10.

In some embodiments, the first negative electrode film layer includes a first negative electrode active material, the second negative electrode film layer includes a second negative electrode active material, and the first negative electrode active material and/or the second negative electrode active material includes the silicon-based material. In some embodiments, both the first negative electrode active material and the second negative electrode active material include the silicon-based material, and a mass percentage of the silicon-based material in the first negative electrode active material is greater than a mass percentage of the silicon-based material in the second negative electrode active material. A mass percentage of the silicon-based material in the first negative electrode active material is greater than or equal to 5%; in some embodiments, a mass percentage of the silicon-based material in the first negative electrode active material is 5%-25%; and in some embodiments, a mass percentage of the silicon-based material in the first negative electrode active material is 5%-20%. The type of the silicon-based material is the same as described above. In addition to the silicon-based material, the first negative electrode active material further includes a carbon material, where the carbon material includes at least one of graphite, soft carbon, or hard carbon. In some embodiments, the carbon material includes graphite. Furthermore, the second negative electrode active material includes a carbon material, where the carbon material is the same as or different from the carbon material in the negative electrode film layer. In some embodiments, the carbon material includes high-compacted graphite and/or additive with a powder compaction density of 1.8 g/cm³ or higher.

For the negative electrode plate including the first and second negative electrode film layers, preparation may be performed as follows, for example.

Using a dual-layer coating technique, a slurry containing high-compacted graphite with a powder compaction density of 1.8 g/cm³ or higher and/or the additive is first applied to both surfaces of a current collector 1 to form the second negative electrode film layer 22, followed by applying a composite slurry containing graphite, the silicon-based material, the additive, and the like thereon to form the first negative electrode film layer 21, thereby forming a dual-layer negative electrode film layer 2, resulting in the negative electrode plate, as shown in FIG. 1. Through this composite slurry and dual-layer coating approach, the advantages of graphite and the silicon-based material are fully utilized, and different distributions in the direction perpendicular to the current collector can improve fast-charging performance of the negative electrode plate, achieving a negative electrode plate with high fast-charging performance and high compaction.

In some embodiments, the negative electrode film layer includes both high-valence sulfur and low-valence sulfur, and/or the negative electrode film layer includes both high-valence selenium and low-valence selenium. In some embodiments, the high-valence sulfur includes at least one of +4 valence sulfur or +6 valence sulfur, with an S2p spectral peak of 168.5 eV-171 eV; and the low-valence sulfur includes -2 valence sulfur to -1/6 valence sulfur, with an S2p spectral peak of 161 eV-166.5 eV. In some embodiments, the high-valence selenium includes at least one of +4 valence selenium or +6 valence selenium, with an Se3d spectral peak of the high-valence selenium being 58.9 eV-61.2 eV; and in some embodiments, the low-valence selenium includes -2 valence selenium, with an Se3d spectral peak of the low-valence selenium being 54 eV-55.1 eV. The high-valence sulfur and high-valence selenium are generated due to oxidation after electron loss, forming alkyl sulfates and alkyl selenates that participate in SEI formation, while the low-valence sulfur and low-valence selenium are generated due to reduction after electron gain, forming PEO-like polymers that participate in SEI formation.

In the secondary battery of this application, as an example, the negative electrode current collector has two surfaces opposite to each other in a thickness direction thereof, and the negative electrode film layer is disposed on either one or both of the two opposite surfaces of the negative electrode current collector.

In some embodiments, the negative electrode current collector may be a metal foil or a composite current collector. For example, a copper foil may be used as the metal foil. The composite current collector may include a polymer material substrate and a metal layer formed on at least one surface of the polymer material substrate. The composite current collector may be formed by forming a metal material (for example, copper, copper alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), polyethylene (PE)).

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dots, carbon nanotubes, graphene, or carbon nanofibers.

In some embodiments, the negative electrode film layer further optionally includes other auxiliaries, such as a thickener (for example, sodium carboxymethyl cellulose (CMC-Na)).

In some embodiments, the negative electrode plate may be prepared as follows: components for preparing the negative electrode plate, such as the negative electrode active material (carbon material and/or silicon-based material), the additive, the conductive agent, the binder, and any other components, are dispersed in a solvent (for example, deionized water) to form a negative electrode slurry; the negative electrode slurry is applied to the negative electrode current collector, and after processes such as drying and cold pressing, the negative electrode plate is obtained.

The secondary battery of this application includes a positive electrode plate.

In some embodiments, the positive electrode plate includes a positive electrode current collector and a positive electrode film layer disposed on at least one surface of the positive electrode current collector, where the positive electrode film layer includes a lithium replenishing agent, and the lithium replenishing agent includes at least one of lithium sulfide, lithium selenide, lithium oxide, or lithium nitride. Since active lithium is consumed during the formation of lithium polysulfide/lithium polyselenide from the sulfur-containing substance/selenium-containing substance in the negative electrode plate, incorporating the lithium replenishing agent into the positive electrode film layer can supplement active lithium, enabling the secondary battery to exhibit high energy density and fast-charging performance.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material (for example, aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, a positive electrode active material in the positive electrode film layer may be a positive electrode active material known in the art for batteries. As an example, the positive electrode active material may include at least one of the following materials: a lithium-containing phosphate with an olivine structure, a lithium transition metal oxide, or their respective modified compounds. However, this application is not limited to these materials and may alternatively use other conventional well-known materials that can be used as positive electrode active materials for batteries. These positive electrode active materials may be used alone or in combination of two or more. Examples of the lithium transition metal oxide may include, but are not limited to, at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (for example, LiNi_{0.85}Co_{0.15}Al_{0.05}O₂), or their modified compounds. Examples of the lithium-containing phosphate with an olivine structure may include, but are not limited to, at least one of lithium iron phosphate (for example, LiFePO₄ (also abbreviated as LFP)), a composite material of lithium iron phosphate and carbon, lithium manganese phosphate (for example, LiMnPO₄), a composite material of lithium manganese phosphate and carbon, lithium manganese iron phosphate, or a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, or carbon nanofibers.

In some embodiments, the positive electrode plate may be prepared as follows: components for preparing the positive electrode plate, such as the positive electrode active material, the conductive agent, the binder, the lithium replenishing agent, and any other components, are dispersed in a solvent (for example, N-methylpyrrolidone) to form a positive electrode slurry; the positive electrode slurry is applied to the positive electrode current collector, and after processes such as drying and cold pressing, the positive electrode plate is obtained.

In the secondary battery of this application, the electrolyte includes a cyclic carbonate compound; and in some embodiments, the cyclic carbonate compound includes at least one of ethylene carbonate, fluoroethylene carbonate, difluoroethylene carbonate, vinylene carbonate, or butylene carbonate. These compounds can undergo a nucleophilic reaction with the additive in the negative electrode film layer, participate in forming an SEI film, and improve storage performance of the secondary battery.

In some embodiments, the electrolyte includes an organic solvent and an electrolytic salt dispersed in the organic solvent, where specific types and compositions of the organic solvent and lithium salt are not particularly limited and may be selected according to actual needs. For example, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro-bis(oxalato)phosphate, or lithium tetrafluoro(oxalato)phosphate. For the solvent, in addition to the cyclic carbonate compounds mentioned above, the solvent may also be selected from at least one of ethyl methyl carbonate, diethyl carbonate, dimethyl carbonate, dipropyl carbonate, methyl propyl carbonate, ethyl propyl carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, or diethyl sulfone.

The secondary battery of this application further includes a separator. This application imposes no particular limitations on the type of separator, and any well-known porous structure separator with good chemical stability and mechanical stability may be used.

In some embodiments, a material of the separator may be selected from at least one of glass fiber, non-woven fabric, polyethylene, polypropylene, or polyvinylidene fluoride. The separator may be a single-layer film or a multilayer composite film, with no particular limitation. When the separator is a multilayer composite film, materials of various layers may be the same or different, with no particular limitation.

The secondary battery of this application may be prepared using conventional methods, for example, winding or stacking the positive electrode plate, the separator, and the negative electrode plate in sequence, with the separator positioned between the positive electrode plate and the negative electrode plate for isolation, to obtain a battery cell; placing the battery cell into an outer packaging, injecting the electrolyte, and obtaining an electrode assembly. The outer packaging may be a hard shell, such as a hard plastic shell, an aluminum shell, or a steel shell. The outer packaging may also be a soft pouch, such as a pouch-type soft package. A material of the soft pouch may be plastic, examples of which include polypropylene, polybutylene terephthalate, and polybutylene succinate.

This application imposes no particular limitation on a shape of the secondary battery, which may be cylindrical, square, or any other shape.

In some embodiments, the secondary battery may be assembled into a battery module, where a number of secondary batteries contained in the battery module may be one or more, and a specific number may be selected by those skilled in the art according to an application and capacity of the battery module.

In some embodiments, the battery module may be further assembled into a battery pack, where a number of battery modules contained in the battery pack may be one or more, and a specific number may be selected by those skilled in the art according to use and capacity of the battery pack.

Furthermore, this application also provides an electric apparatus including at least one of the secondary battery, battery module, or battery pack provided in this application. The secondary battery, battery module, or battery pack may be used as a power source of the electric apparatus or as an energy storage unit of the electric apparatus. The electric apparatus may include mobile devices (for example, mobile phones or laptops), electric vehicles (for example, pure electric vehicles, hybrid electric vehicles, plug-in hybrid electric vehicles, electric bicycles, electric scooters, electric golf carts, or electric trucks), electric trains, ships, satellites, energy storage systems, and the like, but is not limited thereto.

As the electric apparatus, a secondary battery, battery module, or battery pack may be selected according to usage requirements.

### Examples

The following describes examples of this application. The examples described below are exemplary and are intended only to explain this application, not to be construed as limiting this application. For examples where specific techniques or conditions are not specified, the techniques or conditions described in the literature in the field or according to product specifications are followed. The reagents or instruments used are all conventional products commercially available if no manufacturer is indicated.

### Example 1

### (1) Preparation of negative electrode plate

A negative electrode active material (artificial graphite and silicon monoxide, with a mass ratio of 90%:10%), an additive elemental sulfur (particle size Dᵥ50 = 200 nm), a conductive agent Super P, carbon nanotubes (CNTs), the binder styrene-butadiene rubber, and a thickener sodium carboxymethyl cellulose were thoroughly mixed in a weight ratio of 94.5%:2%:1%:0.5%:1%:1% in an appropriate amount of deionized water solvent to form a negative electrode slurry.

The negative electrode slurry was applied to both surfaces of the negative electrode current collector copper foil, followed by drying and cold pressing, to obtain a negative electrode plate.

### (2) Preparation of positive electrode plate

LiNi_{0.8}Co_{0.1}Mn_{0.1}O₂ (NCM811), the conductive agent Super P, and the binder polyvinylidene fluoride were mixed in a weight ratio of 96%:2%:2%, an appropriate amount of solvent NMP was added, and the mixture was stirred well to obtain a positive electrode slurry. The positive electrode slurry was applied to both surfaces of the positive electrode current collector aluminum foil, followed by drying and cold pressing, to obtain a positive electrode plate.

### (3) Electrolyte

In an argon atmosphere glovebox (H₂O < 0.01 ppm, O₂ < 0.01 ppm), the solvents ethylene carbonate (EC) and ethyl methyl carbonate (EMC) were mixed well in a volume ratio of 4:6, lithium salt LiPF₆ was added and dissolved therein, and the mixture was stirred well, with a final concentration of lithium salt LiPF₆ being 12.5%, to serve as the electrolyte.

### (4) Separator

A polyethylene film was used as the separator.

### (5) Lithium-ion battery

The positive electrode plate, the separator, and the negative electrode plate described above were stacked in sequence, with the separator positioned between the positive and negative electrode plates, and wound to obtain a battery cell. The battery cell was placed in a battery outer packaging, followed by injection of the electrolyte, sealing, resting, formation, shaping, and capacity testing, to prepare a lithium-ion battery with a thickness of 4.2 mm, a width of 42 mm, and a length of 49.5 mm.

### Examples 2-14

The preparation method was similar to that of Example 1, with the difference being that different types or percentages of the additive were used, as detailed in Table 1.

### Example 15

The preparation method was similar to that of Example 1, with the difference being that the negative electrode plate was prepared as follows:

The first negative electrode active material (artificial graphite and silicon monoxide, with a mass ratio of 80%:20%), a composite material of elemental sulfur and carbon nanotubes (particle size Dᵥ50 = 200 nm), the conductive agent Super P, carbon nanotubes (CNTs), the binder styrene-butadiene rubber, and the thickener sodium carboxymethyl cellulose were thoroughly mixed in a weight ratio of 94.5%:2%:1%:0.5%:1%:1% in an appropriate amount of deionized water solvent to form a first slurry.

The second negative electrode active material (artificial graphite and silicon monoxide, with a mass ratio of 95%:5%), nanoporous carbon-coated elemental selenium (particle size Dᵥ50 = 200 nm), the conductive agent Super P, carbon nanotubes (CNTs), the binder styrene-butadiene rubber, and the thickener sodium carboxymethyl cellulose were thoroughly mixed in a weight ratio of 96%:0.5%:1%:0.5%:1%:1% in an appropriate amount of deionized water solvent to form a second slurry.

With the use of a dual-chamber coating device, the first slurry and the second slurry were extruded simultaneously. The second slurry was applied to both surfaces of the negative electrode current collector copper foil, and the first slurry was applied to the second slurry. After drying and cold pressing, the negative electrode plate was obtained.

### Comparative Example 1

The preparation method was similar to that of Example 1, with the difference being that the negative electrode plate was prepared as follows: a negative electrode active material (artificial graphite and silicon monoxide, with a mass ratio of 90%:10%), the conductive agent Super P, carbon nanotubes (CNTs), the binder styrene-butadiene rubber, and the thickener sodium carboxymethyl cellulose were thoroughly mixed in a weight ratio of 96.5%:1%:0.5%:1%:1% in an appropriate amount of deionized water solvent to form a negative electrode slurry.

The negative electrode slurry was applied to both surfaces of the negative electrode current collector copper foil, followed by drying and cold pressing, to obtain the negative electrode plate.

### Comparative Example 2

The preparation method was similar to that of Example 15, with the difference being that the negative electrode plate was prepared as follows:

The first active material (artificial graphite and silicon monoxide, with a mass ratio of 80%:20%), the conductive agent Super P, carbon nanotubes (CNTs), the binder styrene-butadiene rubber, and the thickener sodium carboxymethyl cellulose were thoroughly mixed in a weight ratio of 96.5%:1%:0.5%:1%:1% in an appropriate amount of deionized water solvent to form a first slurry.

The second active material (artificial graphite and silicon monoxide, with a mass ratio of 95%:5%), the conductive agent Super P, carbon nanotubes (CNTs), the binder styrene-butadiene rubber, and the thickener sodium carboxymethyl cellulose were thoroughly mixed in a weight ratio of 96.5%:1%:0.5%:1%:1% in an appropriate amount of deionized water solvent to form a second slurry.

With the use of a dual-chamber coating device, the first slurry and the second slurry were extruded simultaneously. The second slurry was applied to both surfaces of the negative electrode current collector copper foil, and the first slurry was applied to the second slurry. After drying and cold pressing, the negative electrode plate was obtained.

The secondary batteries of the above examples and comparative examples were tested as follows, with results collectively shown in Table 1 below.

### Battery test

### Storage performance (capacity retention rate after storage at 60°C for 100 days)

The battery capacity recovery rate testing process was as follows: Before storage, at 25°C, the batteries of the examples and comparative examples were charged at a constant current of 1/3C to 4.25 V, then charged at a constant voltage of 4.25 V to 0.05C, rested for 30 minutes, and discharged at 1/3C to 2.8 V, with the resulting capacity recorded as the initial capacity C0. After storage at 60°C for 100 days, the battery temperature was cooled to room temperature, the above steps were repeated, and the measured capacity was recorded as Cr; and the battery capacity recovery rate after 100 days of storage was H = Cr/C0 * 100%.

A higher H indicated better storage performance.

### Conductivity (film resistance of electrode plate)

The rolled film was cut into a rectangular size of approximately 5 cm × 10 cm and placed between two electrodes of a film resistance tester. Test pressure was set to 25 MPa in the MRMS software, with a holding time of 25 seconds. The software automatically read data such as film thickness, resistance, resistivity, and conductivity, and the resistance data was recorded.

A lower resistance value indicated better conductivity.

### Fast-charging performance (10%-80% SOC fast-charging time)

The 10%-80% SOC charging time testing process was as follows: At 25°C, the batteries of the examples and comparative examples were charged from 10% SOC to 80% SOC in steps of 1.0C/0.8C/0.5C/0.33C, and the charging time at which lithium precipitation did not occur on the negative electrode was recorded as the fast-charging time of the battery at that point.

A shorter fast-charging time indicated better fast-charging performance of the battery.

**Table 1**

| No. | Negative electrode film layer | | Valence states of elements contained in additive in negative electrode film layer | Battery test performance | | |
|---|---|---|---|---|---|---|
| | Additive | | | Storage performance | Conductivity | Fast-charging performance |
| | Type | Content (wt%) | | | | |
| Example 1 | Elemental sulfur | 2% | -2; +4; +6 | 93.5% | 0.75 Ω | 39 min |
| Example 2 | Elemental selenium | 2% | -2; +4; +6 | 93.4% | 0.72 Ω | 39 min |
| Example 3 | Lithium sulfide | 2% | -2; +4; +6 | 93.3% | 0.73 Ω | 40 min |
| Example 4 | Lithium selenide | 2% | -2; +4; +6 | 93.4% | 0.73 Ω | 40 min |
| Example 5 | Composite material of elemental sulfur and CNTs | 2% | -2; +4; +6 | 94.5% | 0.47 Ω | 31 min |
| Example 6 | Composite material of lithium selenide and CNTs | 2% | -2; +4; +6 | 94.6% | 0.46 Ω | 31 min |
| Example 7 | Nanoporous carbon-coated elemental selenium | 2% | -2; +4; +6 | 94.8% | 0.47 Ω | 30 min |
| Example 8 | Composite material of elemental sulfur and CNTs | 0.50% | -2; +4; +6 | 92.8% | 0.62 Ω | 35 min |
| Example 9 | Same as Example 8 | 1% | -2; +4; +6 | 93.1% | 0.59 Ω | 33 min |
| Example 10 | Same as Example 8 | 3% | -2; +4; +6 | 93.4% | 0.46 Ω | 34 min |
| Example 11 | Same as Example 8 | 5% | -2; +4; +6 | 92.3% | 0.43 Ω | 35 min |
| Example 12 | Same as Example 8 | 8% | -2; +4; +6 | 91.5% | 0.40 Ω | 36 min |
| Example 13 | Same as Example 8 | 10% | -2; +4; +6 | 90.3% | 0.38 Ω | 39 min |
| Example 14 | Same as Example 8 | 12% | -2; +4; +6 | 89.8% | 0.35 Ω | 42 min |
| Example 15 | Upper layer: Composite material of elemental sulfur and CNTs | Upper layer: 2% | -2; +4; +6 | 95.0% | 0.47 Ω | 29 min |
| | Lower layer: Nanoporous carbon-coated elemental selenium | Lower layer: 0.5% | -2; +4; +6 | | | |
| Comparative Example 1 | No additive | - | - | 87.5% | 0.67 Ω | 48 min |
| Comparative Example 2 | Upper layer: No additive | | | 87.7% | 0.66 Ω | 45 min |
| | Lower layer: No additive | | | | | |

According to the results in Table 1 above, compared to Comparative Examples 1 and 2, the secondary batteries of Examples 1-15 all exhibit excellent storage performance.

Moreover, compared to Examples 1-4, in Examples 5-7, the additives are in the form of a composite with carbon nanotubes or have a carbon coating layer, which not only provides excellent storage performance of the battery but also reduces resistance, improves conductivity of the secondary battery, and achieves better fast-charging performance.

In Examples 8-14, compared to Example 14, Examples 8-13 achieve excellent storage performance, conductivity, and fast-charging performance by keeping a mass percentage of the additive relative to a total mass of the negative electrode film layer less than or equal to 10%. Furthermore, compared to Examples 12 and 13, Examples 8-11 achieve even more excellent storage performance, conductivity, and fast-charging performance by keeping a mass percentage of the additive relative to a total mass of the negative electrode film layer at 0.5%-5%.

Additionally, in Example 15, by configuring the negative electrode film layer as a dual-layer structure, storage performance and fast-charging performance of the secondary battery are further improved.

In contrast, Comparative Examples 1 and 2, which do not contain the specific additive of this application, fail to improve storage performance and cannot achieve the technical effects of this application.

It should be noted that this application is not limited to the foregoing embodiments. The embodiments described above are merely exemplary, and embodiments having substantially the same technical concept and achieving the same effects within the scope of the technical solutions of this application are included within the technical scope of this application. Furthermore, without departing from the gist of this application, various modifications conceivable by those skilled in the art applied to the embodiments and other configurations constructed by combining some constituent elements of the embodiments are also included within the scope of this application.

## Claims

1. A secondary battery comprising a negative electrode plate, the negative electrode plate comprising a negative electrode current collector and a negative electrode film layer disposed on at least one surface of the negative electrode current collector, wherein the negative electrode film layer comprises an additive capable of undergoing a nucleophilic reaction with a cyclic carbonate compound.

2. The secondary battery according to claim 1, wherein
the additive comprises at least one of a sulfur-containing substance, a selenium-containing substance, a composite of a sulfur-containing substance and a carbon-based material, a composite of a selenium-containing substance and a carbon-based material, a sulfur-containing substance having a carbon coating layer, or a selenium-containing substance having a carbon coating layer;
optionally, the sulfur-containing substance comprises at least one of elemental sulfur, lithium sulfide, or sodium sulfide;
optionally, the selenium-containing substance comprises at least one of elemental selenium, lithium selenide, sodium selenide, cobalt selenide, or nickel selenide; and
optionally, the carbon-based material comprises a nano carbon-based material and/or graphene, and optionally, the nano carbon-based material comprises carbon nanotubes.

3. The secondary battery according to claim 1 or 2, wherein
based on a total mass of the negative electrode film layer, a mass percentage of the additive is less than or equal to 10%, optionally 0.5%-5%.

4. The secondary battery according to any one of claims 1 to 3, wherein
a particle size Dᵥ50 of the additive is 50 nm-500 nm, optionally 100 nm-200 nm.

5. The secondary battery according to any one of claims 1 to 4, wherein
the negative electrode film layer comprises a negative electrode active material, and the negative electrode active material comprises a silicon-based material,
optionally, a mass percentage of the silicon-based material in the negative electrode active material is greater than or equal to 5%, optionally greater than or equal to 10%; and
optionally, the silicon-based material comprises at least one of elemental silicon, a silicon-carbon composite material, or a silicon-oxygen compound.

6. The secondary battery according to any one of claims 1 to 5, wherein
the negative electrode film layer comprises a first negative electrode film layer and a second negative electrode film layer, the second negative electrode film layer being disposed between the negative electrode current collector and the first negative electrode film layer; and
the first negative electrode film layer and/or the second negative electrode film layer comprises the additive.

7. The secondary battery according to claim 6, wherein
in the first negative electrode film layer, a mass percentage of the additive is greater than 0% and less than or equal to 10%, optionally 0.5%-5%, and
in the second negative electrode film layer, a mass percentage of the additive is 0%-5%, optionally 0.1%-2%.

8. The secondary battery according to claim 6 or 7, wherein
both the first negative electrode film layer and the second negative electrode film layer comprise the additive; and
in the first negative electrode film layer, the mass percentage of the additive is denoted as A1, and in the second negative electrode film layer, the mass percentage of the additive is denoted as A2; the secondary battery satisfies: A1/A2 > 1; and optionally, 2 ≤ A1/A2 ≤ 10.

9. The secondary battery according to any one of claims 6 to 8, wherein
both the first negative electrode film layer and the second negative electrode film layer comprise the additive, and materials of the additive in the first negative electrode film layer and the second negative electrode film layer are the same or different.

10. The secondary battery according to any one of claims 6 to 9, wherein
the first negative electrode film layer comprises a first negative electrode active material, the second negative electrode film layer comprises a second negative electrode active material, and the first negative electrode active material and/or the second negative electrode active material comprises the silicon-based material; and
optionally, both the first negative electrode active material and the second negative electrode active material comprise the silicon-based material, and a mass percentage of the silicon-based material in the first negative electrode active material is greater than a mass percentage of the silicon-based material in the second negative electrode active material.

11. The negative electrode plate according to claim 10, wherein
the first negative electrode active material and/or the second negative electrode active material further comprises a carbon material; and optionally, the carbon material comprises graphite.

12. The secondary battery according to any one of claims 1 to 11, wherein
the secondary battery comprises a positive electrode plate, the positive electrode plate comprises a positive electrode current collector and a positive electrode film layer disposed on at least one surface of the positive electrode current collector, and the positive electrode film layer comprises a lithium replenishing agent; and
optionally, the lithium replenishing agent comprises at least one of lithium sulfide, lithium selenide, lithium oxide, or lithium nitride.

13. The secondary battery according to any one of claims 1 to 12, wherein
the secondary battery comprises an electrolyte, and the electrolyte comprises a cyclic carbonate compound; and
optionally, the cyclic carbonate compound comprises at least one of ethylene carbonate, fluoroethylene carbonate, difluoroethylene carbonate, vinylene carbonate, or butylene carbonate.

14. The secondary battery according to any one of claims 1 to 13, wherein
the negative electrode film layer comprises both high-valence sulfur and low-valence sulfur, and/or the negative electrode film layer comprises both high-valence selenium and low-valence selenium;
optionally, the high-valence sulfur comprises at least one of +4 valence sulfur or +6 valence sulfur;
optionally, an S2p spectral peak of the high-valence sulfur is 168.5-171 eV; optionally, the low-valence sulfur comprises -2 valence sulfur to -1/6 valence sulfur;
optionally, an S2p spectral peak of the low-valence sulfur is 161-166.5 eV; optionally, the high-valence selenium comprises at least one of +4 valence selenium or +6 valence selenium;
optionally, an Se3d spectral peak of the high-valence selenium is 58.9-61.2 eV; optionally, the low-valence selenium comprises -2 valence selenium; and optionally, an Se3d spectral peak of the low-valence selenium is 54-55.1 eV.

15. An electric apparatus comprising the secondary battery according to any one of claims 1 to 14.
